# EUROPEAN PATENT APPLICATION

(11) **EP 4 372 982 A1**
(43) Date of publication of application: **22.05.2024**
(21) Application number: 23382290.7
(22) Date of filing: 28.03.2023
(51) Int. Cl.: H02S 20/00, F24S 20/70

(54) **GANGWAY FLOAT FOR LOATING SYSTEM FOR PHOTOVOLTAIC PANELS AND FLOATING SYSTEM FOR PHOTOVOLTAIC PANELS**

(30) Priority: 18.11.2022 WO PCT/ES2022/070745
(71) Applicant: Isigenere, S.L., 03460 Beneixama (ES)
(72) Inventor: PONS PUIG, Emilio, 03460 Beneixama (ES); REDÓN SANTAFÉ, Miguel, 03460 Beneixama (ES); DEL VECCHIO, Miguel Ángel, 03460 Beneixama (ES); GÓMEZ GONZÁLEZ, Antonio, 03460 Beneixama (ES)
(74) Representative: Elzaburu S.L.P.

(57) **Abstract**

Gangway float (1) for floating system (2) for photovoltaic panels (3) and floating system (2) for photovoltaic panels (3). The gangway float (1) for photovoltaic panels (3) is constituted by an internally hollow and substantially rectangular in plan part, that comprises:
- an upper surface (4), which folds downwards by means of four lateral surfaces (5) as descending walls,
- a lower surface (6) as a perimeter outer band, which is an outward extension of the side surfaces (5), and
- a perimeter flange (7) on the outer area of the lower surface (6),

such that a hollow space (8) is delimited between the perimeter flange (7) of the bottom surface (6) and the lower part of the side surfaces (5).

## Description

### Field of the invention

The present invention relates to a float whose main use is to serve as a gangway in a floating system for photovoltaic panels. It also relates to a floating system for photovoltaic panels which serves as a support for such panels and which can be installed on water or any other liquid medium.

### Background of the invention

There are numerous systems in the prior art consisting of devices that support photovoltaic panels.

Regarding photovoltaic installations on ground or flat roofs, there are prior art documents, such as WO2010097406A2, EP833098A1 or DE102008055627A1, which describe plastic shell-shaped devices with different inclinations on which the photovoltaic panel is placed on top. The connection to the supporting medium requires the design of different complementary foundation systems which, by means of fixed metal anchors, firmly connect the shell-like structures.

In the field of floating installations, the state of the art includes previous documents such as US20140224165A1, EP2549551B1, WO2010064105A2, ES2178516B1 or ES2366960T3. In general, they consist of a floating element of different geometries resolved by means of a hollow and closed plastic part. In the upper part, one or more photovoltaic panels are supported by a metallic or plastic auxiliary structure with different degrees of continuity with the lower float.

Spanish utility model ES1143535U describes a modular float, which can be used in floating solar photovoltaic installations and which is nestable thanks to its concave geometry and open at the top. The union of two plastic modular floats supports both a photovoltaic solar energy module and a plastic or metal top cover by means of specific fastenings on the long and short sides, thus creating a closed, watertight and passable floating unit. This invention also makes it possible to form floating assemblies with several modular floats with photovoltaic modules surrounded by walkway floats, which act as a walkable access path in these installations.

The floats or floating modules of the prior art used as gangways or walkways are watertight parts, and may be closed modules with a plug, have a flexible inflatable membrane inside, or be filled with a material of lower density than water.

The disadvantage of these floating assemblies is that some of the floats used as walkways are sensitive to external actions due to permanent loads, variable environmental actions and overloads due to passage and operation, as well as those due to auxiliary electrical equipment installed on them.

A gangway float is therefore needed for a floating system for photovoltaic panels that has improved buoyancy in all situations.

### Summary of the invention

The object of the present invention is therefore to provide a gangway float for a floating system for photovoltaic panels which overcomes the drawbacks of the prior art.

The invention provides a gangway float for a floating system for photovoltaic panels, consisting of an internally hollow and substantially rectangular in plan, comprising:
- an upper surface, which is folded downwards by means of four lateral surfaces as descending walls,
- a lower surface as a perimeter outer band, which is an outward extension of the side surfaces, and
- a perimeter flange on the outside of the lower surface,
such that a hollow space is delimited between the perimeter flange of the bottom surface and the underside of the side surfaces.

The invention also provides a gangway float for a floating system for photovoltaic panels comprising two gangway floats as described above joined by their bottom surfaces.

The invention also provides a floating system for photovoltaic panels comprising:
- a series of float-photovoltaic panel assemblies, with one or two main floats for each photovoltaic panel, each photovoltaic panel being configured to assemble over the corresponding main float(s), forming a float-photovoltaic panel assembly,
- a plurality of gangway floats as described above, which surround the float-photovoltaic panel assemblies forming intermediate and side corridors, and
- connecting means configured to link adjacent gateway floats to each other and the gateway floats to adjacent main floats.

By means of this configuration of the gangway float, as it comes into contact with the water surface and confines a volume of air, it provides the gangway float with the necessary lift forces to balance the external actions.

Another advantage of the invention is that its logistics can be optimised, as it is a nestable, stackable and palletisable piece.

Another advantage of the invention is that it is completely modular, allowing installations of the desired surface area and geometry to be achieved by combining photovoltaic panels and floats.

Further advantageous embodiments of the invention are set out in the dependent claims.

### Brief description of the drawings

In the following, the subject matter of the present invention will be illustrated in a nonlimiting manner by reference to the accompanying drawings, in which:
Figure 1 shows a perspective view of a gangway float according to an embodiment of the invention.
Figure 2 shows a detail of a corner of the gangway float of figure 1.
Figure 3 shows a plan view of the gangway float of figure 1.
Figure 4 shows a bottom view of the gangway float of figure 1.
Figure 5 shows two gangway floats of figure 1 connected by means of connecting means.
Figure 6 shows a detail of the underside of the gangway float of figure 1.
Figure 7 shows a side view of the gangway float of figure 1.
Figure 8 shows an embodiment of a floating system for photovoltaic panels with one main float per photovoltaic panel.
Figure 9 shows an embodiment of a floating system for photovoltaic panels with two main floats per photovoltaic panel.
Figure 10 shows an embodiment of a floating system for photovoltaic panels with two main floats per photovoltaic panel.
Figure 11 shows a perspective view of a floating system for photovoltaic panels with two main floats per photovoltaic panel.
Figure 12 shows a gangway float for a floating system for photovoltaic panels in another configuration.
Figure 13 shows a sectional view of the gangway float of figure 12.
Figures 14 and 15 show a series of gangway floats of the invention stacked on a pallet.
Figure 16 shows a plan view of an arrangement of gangway floats of the invention in a container.

### Detailed description of the invention

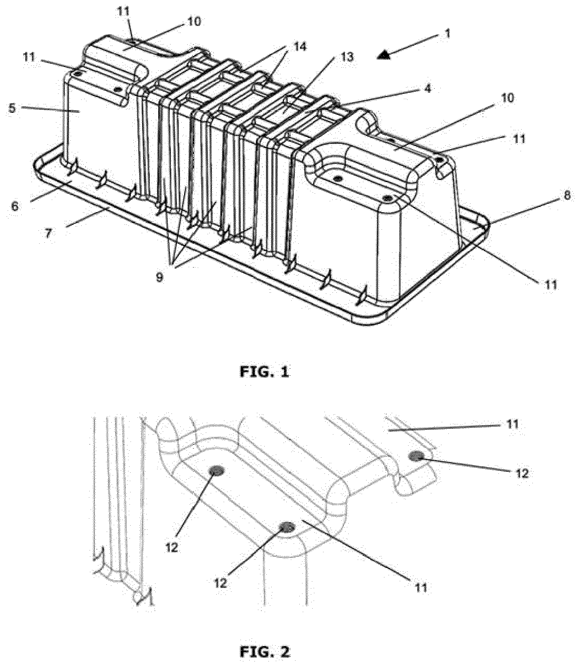

Figures 1 to 7 show a gangway float 1 according to an embodiment of the invention.

As can be seen (for example, in figure 1) the gangway float 1 for floating system 2 for photovoltaic panels 3 of the invention is constituted by an inwardly hollow and substantially rectangular in plan piece, and comprising:
- an upper surface 4, which is folded downwards by means of four lateral surfaces 5 as descending walls,
- a lower surface 6 as a perimeter outer band, which is an outward extension of the side surfaces 5, and
- a perimeter flange 7 on the outer area of the lower surface 6,
so that a hollow space 8 is delimited between the perimeter flange 7 of the lower surface 6 and the lower part of the side surfaces 5.

The gangway float 1 shown in Figures 1 to 7 is a symmetrical floating part for use as a gangway and walkway in logistics-optimised solar floating systems. In particular, the upper surface 4 forms the walkway area of the gangway.

It is formed by a hollow piece that closes at the bottom when it comes into contact with the sheet of water and confines a volume of air that gives the system buoyancy, thus providing the gangway float 1 with the necessary support forces to balance the external actions due to permanent loads, variable environmental actions and overloads of use due to passage and operation as well as auxiliary electrical equipment.

In one embodiment of the gangway float 1, its supporting structure is made of plastic material, but it can also be made of recyclable polymeric and cork-based materials. Additionally, it can be made of metallic materials such as aluminium.

In another embodiment of the invention the inverted gangway float 1 has four joint zones (corresponding to the recessed areas 11 of figures 1 and 2), one on each corner, each with two holes 12, for example pre-tapped holes for M20 nuts.

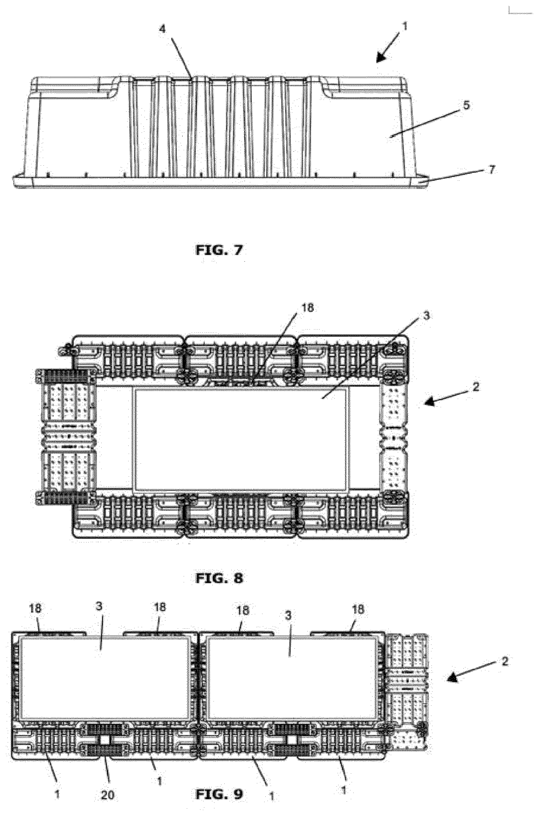

Figures 8 to 11 show embodiments of a floating system 2 for photovoltaic panels 3 comprising:
- a series of panel-photovoltaic panel assemblies, with one main float 18 for each photovoltaic panel 3 (Figure 8) or two main floats 18 for each photovoltaic panel 3 (Figures 9 to 11), each photovoltaic panel 3 being configured to assemble over the corresponding main float(s) 18, forming a float-photovoltaic panel assembly,
- a plurality of gangway floats 1 as described above, which surround the float-photovoltaic panel assemblies forming intermediate and lateral corridors 19, and
- connecting means 20 configured to link the adjacent gangway floats 1 to each other and the gangway floats 1 to the adjacent main floats 18.

As indicated, in the case of the embodiment of Figure 8 this corresponds to the monofloat configuration option (i.e. with one main float 18 per photovoltaic panel 3) and the embodiments of Figures 9, 10 and 11 correspond to the bifloat configuration option (i.e. with two main floats 18 per photovoltaic panel 3).

The solid connection of gangway float rows 1 and main floats 18 ensures that the lift forces of the gangway float rows 1 are always positive and satisfactorily counteract vertical gravitational forces and destabilising dynamic actions.

The gangway float 1 is a part with a rigid supporting structure that is made of a thermoplastic, recyclable plastic, or natural cork-based composite, or metallic material that confines a volume of air within it that provides buoyancy to the system through the enclosed volume or space.

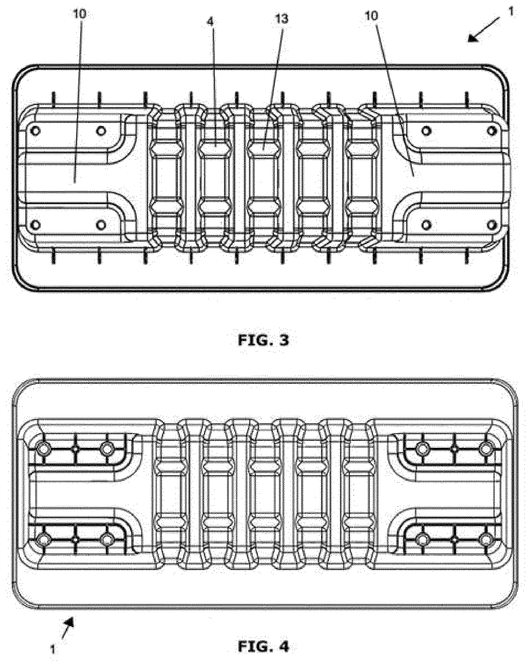

In one embodiment, the gangway float 1 has an upper part composed of a central rectangular zone 13 having two appendages or extremities as T-shaped protruding zones 10 at each of its ends of the short sides of the rectangular geometry (Figures 1 and 3). There are also a plurality of ribs 14 on the central rectangular zone 13 (figure 1).

Said T-shaped appendages start and join along their entire length at the edges of the short sides of the rectangular central area 13 described above and reach the ends of the gangway float 1, leaving free a small hollow in the shape of a parallelepiped with rounded contours, which is located at the four corners of the gangway float 1. These four specific areas at the corners of the upper part of the part are the junction zone of each of the gangway floats 1 with their successive gangway floats 1 and also with the main float 18 which serves as a support for solar panels 3.

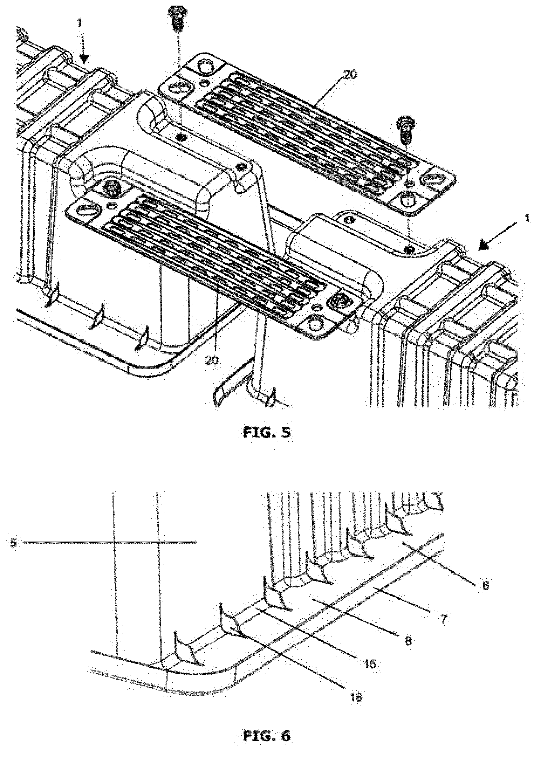

The junction area has a given dimension that allows the connection means 20 or junction plate between gangway floats 1 and main floats 18 that support solar panels 3 to be positioned. The M20 screw, made of polymeric or metallic material, is inserted into the pre-threaded hole of the gangway float 1 on the connection means 20 and through the slotted eyelet provided therein, which joins each of the corners of a gangway float 1 unit to form the structured grid or matrix of a solar floating plant (figure 5).

The minimum number of gangway float units 1 necessary to ensure the buoyancy of the assembly, optimally counteracting the gravitational forces thanks to the sustaining forces of the hydrostatic thrust produced inside the air volume of the part and, in turn, ensuring the lateral stability of the assembly, is two gangway float units 1 that are joined on the inside to the main floats 18 that support a solar panel 3.

The side walls or surfaces 5 of the gangway float 1 may have a series of stiffeners 9 that provide the part with sufficient strength to resist the vertical gravitational loads transmitted by the main gangway function and the passage area of the upper horizontal part, due to the weight of operators and complementary installations.

The stiffeners 9 are ribs with a U-shaped resistant section, continuous in height, but with increasing width from the upper surface 4 to the lower surface 5 or base of the gangway float 1, in such a way as to transmit the load at the base as uniformly as possible and at the same time, to avoid the buckling or lateral buckling of each of these lateral surfaces 5 under compressive stresses that are transmitted from the upper horizontal part.

The side surfaces 5 and the bottom surface 6 as a perimeter outer band are joined by a rounded edge 15. The recessing between the two surfaces is achieved by uniform, evenly spaced stiffening of the entire contour by means of triangular stiffening gusset plates 16 (figure 6).

The lower surface 6 or outer perimeter band has a width always in contact with the water surface that ensures the stability and buoyancy of the whole of the invention. This outer perimeter band has in its outermost zone a perimeter flange 7 or inverted fold (figure 6) which creates a small hollow space 8 or floodable volume which is filled with water thanks to gravitational forces, and which is a key element in preserving the stability of the gangway float 1 against turns or momentum torques whose axis is in the plane of the water, since the volume of water accumulated within it exerts a stabilising lever arm effect at all times to compensate for the overturning or destabilising moments of the gangway float 1 due to environmental actions such as wind, waves and currents.

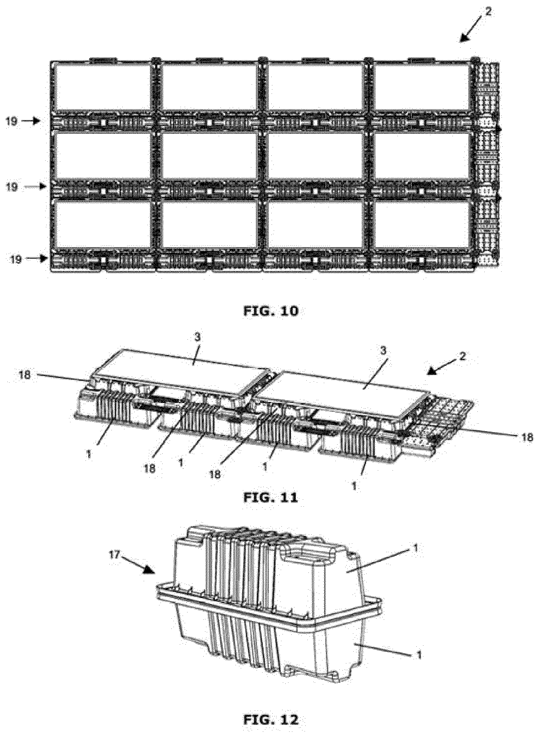

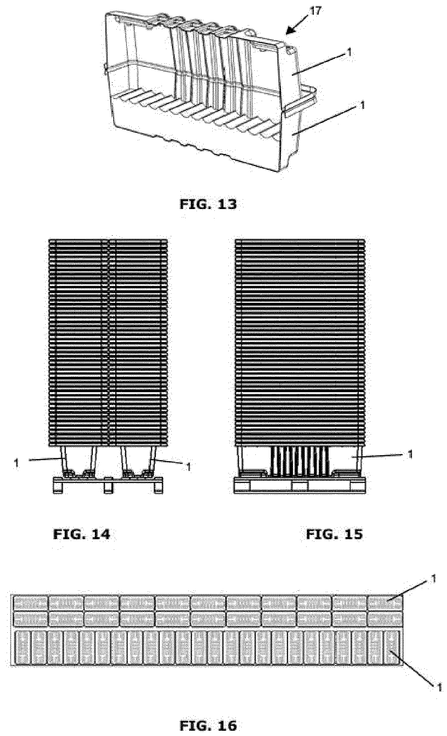

Figures 12 and 13 show a composite gangway float 17 for floating system 2 for photovoltaic panels 3 consisting of two gangway floats 1 of figures 1 to 7 joined by their lower surfaces 6. This results in a very simple, flexible and easily transportable piece that after assembly on site functions as a breakwater for floating solar installations.

These composite gangway floats 17 are also suitable for forming a floating system 2 for photovoltaic panels 3.

The lower part is partially filled with water (figure 13) and provides the system with a hydrodynamic self-supporting capacity that improves both the behaviour of the system under the dynamic and repetitive action of waves and also counteracts the wind suction forces that can cause the gangway floats to lift. The weight of the water volume counteracts the wind suction effect.

The gangway float 1 is nestable and palletisable, as can be seen in figures 14 and 15. As it is nestable, it allows 100 units to be loaded on a pallet.

Figure 16 shows a plan view of an arrangement of gangway floats 1 of the invention in a container, which could accommodate 2300 units of gangway float 1 of the invention.

Although some embodiments of the invention have been described and depicted, it is clear that modifications within the scope of the invention may be made thereto, and the scope of the invention is not to be considered limited to these embodiments, but only to the content of the following claims.

## Claims

1. Gangway float (1) for floating system (2) for photovoltaic panels (3), consisting of an internally hollow and substantially rectangular in plan part, **characterised in that** it comprises:
- an upper surface (4), which folds downwards by means of four lateral surfaces (5) as descending walls,
- a lower surface (6) as a perimeter outer band, which is an outward extension of the side surfaces (5), and
- a perimeter flange (7) on the outer area of the lower surface (6),
such that a hollow space (8) is delimited between the perimeter flange (7) of the bottom surface (6) and the lower part of the side surfaces (5).

2. Gangway float (1) for floating system (2) for photovoltaic panels (3), according to claim 1, wherein the side surfaces (5) comprise a plurality of stiffeners (9).

3. Gangway float (1) for floating system (2) for photovoltaic panels (3), according to claim 2, wherein the stiffeners (9) are U-shaped with increasing width from the upper surface (4) to the lower surface (6).

4. Gangway float (1) for floating system (2) for photovoltaic panels (3), according to any of the previous claims, wherein the upper surface (4) comprises two T-shaped protruding areas (10) adjacent to its short sides, which delimit four sunken areas (11) on the corners of said upper surface (4).

5. Gangway float (1) for floating system (2) for photovoltaic panels (3), according to claim 5, comprising holes (12) in the sunken areas (11) on the corners.

6. Gangway float (1) for floating system (1) for photovoltaic panels (3), according to claim 4 or 5, in which there is a central rectangular area (13) on the upper surface (4) between the two protruding areas (10) in the form of a T with a plurality of ribs (14) on it.

7. Gangway float (1) for floating system (2) for photovoltaic panels (3), according to any of the previous claims, in which between the lateral surfaces (5) and the lower surface (6) there are rounded edges (15) with gusset plates (16) distributed equidistantly.

8. Composite gangway float (17) for floating system (2) for photovoltaic panels (3), **characterized in that** it comprises two gangway floats (1) of claims 1 to 7 joined by their lower surfaces (6).

9. Floating system (2) for photovoltaic panels (3), **characterized in that** it comprises:
- a series of float-photovoltaic panel assemblies, with one or two main floats (18) for each photovoltaic panel (3), each photovoltaic panel (3) being configured to be assembled on the corresponding main float(s) (18), forming a float-photovoltaic panel assembly,
- a plurality of gangway floats (1, 17) of claims 1 to 8, which surround the float-photovoltaic panel assemblies forming intermediate and lateral corridors (19), and
- connection means (20) configured to join the gangway floats (1, 17) adjacent to each other and the gangway floats (1, 17) with the adjacent main floats (18).
